# EUROPEAN PATENT SPECIFICATION

(11) **EP 3 642 536 B1**
(45) Date of publication and mention of the grant of the patent: **25.11.2020**
(21) Application number: 18729690.0
(22) Date of filing: 14.06.2018
(51) Int. Cl.: F21V 27/02, H01R 13/58, H01R 13/52, F21V 23/00

(54) **LOW COST, COMPACT, SIDE ENTRY CABLE SEALING FOR IP66 LED OUTDOOR MODULES**
KOSTENGÜNSTIGE, KOMPAKTE ABDICHTUNG FÜR SEITENAUSGANGSKABEL FÜR IP66-LED-AUSSENBEREICHSMODULE
JOINT D'ÉTANCHÉITÉ POUR CÂBLE À ENTRÉE LATÉRALE À FAIBLE COÛT, COMPACT POUR MODULES EXTÉRIEURS À DEL IP66

(30) Priority: 19.06.2017 EP 17176542
(43) Date of publication of application: 29.04.2020
(73) Proprietor: Signify Holding B.V., 5656 AE Eindhoven (NL)
(72) Inventor: SISMANIDOU, Chrysoula, 5656 AE Eindhoven (NL)
(74) Representative: Pet, Robert Jacob
(86) International application number: PCT/EP2018/065771
(87) International publication number: WO 2018/234140

(56) References cited:
- WO-A1-2017/055100
- US-A- 4 180 297

## Description

### FIELD OF THE INVENTION

The invention relates to a cable grommet element for sealed entry of a cable into a housing. The invention further relates to a housing or a module comprising such grommet element and a method for providing such housing. Yet further, the invention relates to a mold for providing the grommet element.

### BACKGROUND OF THE INVENTION

Sealed cable entries into electric modules are known in the art. WO2013/021017 for instance describes an electrical device, particularly a lighting module, which has a housing that comprises at least one first and one second housing part, at least the first housing part having a connecting groove for receiving, in some sections, at least the second housing part. The first housing part additionally has a seal receiving-portion into which a sealing element with a sealing groove is inserted such that said sealing groove continues the connecting groove in at least some sections. See further for example WO2017/055100A1.

### SUMMARY OF THE INVENTION

Electric modules may need to be protected from ingress of dust. Especially, when used outdoors these modules may also require a protection from ingress of water. An outdoor electric application such as a street light may require a complete protection against dust and a protection against raining water. The degree of protection is standardized and defined in the international standard IEC 60529 and European standard EN 60529 using the IP Code, or International Protection Marking. Typically, a LED outdoor module may require an IP6X rating (indicating a complete protection against dust), especially wherein X is 5 or 6 indicating a protection of the enclosure against water jets from any direction. LED outdoor modules may especially require a sealing of two interfaces against dust and water, especially a sealing of a light emitting interface and a sealing of a cable entry interface. By sealing the light emitting interface and the cable entry interface a sealed space may be provided for the LED module and especially substantially no dust and water may enter the sealed space and contact the (water and dust sensitive) LED module.

Common practice by manufacturers for sealing the cable entry interface is the use of standard off-the-self components, like IP6X cable glands. These components however may limit the architecture and may also increase the Bill of Material (BoM) cost by allowing only bottom cable entry which in turn requires either the use of integrated heatsinks for housing the cable gland and/or milling expensive grooves in the luminaire housing for housing the cable gland. Other sealing methods as dispensing (of sealant), require either additional expensive pre-treatments as plasma treatment or additional protection from the luminaire housing to avoid direct contact of the cable entry interface with waterjets.

Hence, it is an aspect of the invention to provide a cable grommet element for sealed entry of an (electricity) cable into a(n) (electronic) housing which preferably further at least partly obviate(s) one or more of above-described drawbacks. It is a further aspect of the invention to provide a(n) (electronic) housing comprising a cable grommet element, especially comprising a LED outdoor module, which preferably further at least partly obviates one or more of the described drawback. In yet further aspects the invention also provides a method for providing a sealed (electronic) housing, and a mold for providing a cable grommet element described herein.

The present invention may have as object to overcome or ameliorate at least one of the disadvantages of the prior art, or to provide a useful alternative.

Therefore, in a first aspect the invention provides a cable grommet element for sealed entry of a(n) (electricity) cable into a housing, especially an electronic housing, wherein the grommet element is configured to be physically and/or chemically bound to the electricity cable, wherein the grommet element comprises a body, an engagement element, a (flexible) projection, such as a rib, and a cable transit, wherein: (i) the body comprises a first wall, a second wall, and a side wall connecting the top wall to the bottom wall; (ii) the engagement element protrudes from the top wall (of the body), wherein the engagement element comprises an engagement element side wall and an engagement element top part, wherein the engagement element side wall comprises a (flexible) rim configured along a perimeter of the engagement element side wall; wherein the engagement element further comprises an alignment portion protruding from the engagement element side wall; (iii) the (flexible) projection protrudes from the bottom wall (of the body); and (iv) the cable transit is configured for transit (of at least part) of the (electricity) cable from the side wall of the body to the engagement element top part.

The cable transit is especially configured for comprising (a part of) cable. Especially, the cable transit comprises (a part of) the (electricity) cable ("cable"). Especially a first cable end (of the cable) may be provided at the engagement element top part (into the (electric) housing). The cable transit is further especially configured for extending a second cable end (of the cable) (from another side of the grommet element) from the side wall of the body and away from the body, especially (also) away from the (electric) housing.

In embodiments, the grommet element comprises, especially encompasses, (a part of) the cable, especially wherein the cable (with an end of the cable) extends from the engagement top, and especially wherein the cable (with another end of the cable) (also) extends from the side wall. Especially, a first cable end (of the cable) extends from the engagement element top part and a second cable end (of the cable) extends from the side wall of the body. Herein the terms "the grommet element comprises (a part of) the cable" and the "cable transit comprises the cable" especially relate to embodiments, wherein the cable transit comprises a part of the cable.

The cable transit may (further) over a length (of the cable transit) from the side wall (of the body) to the engagement element top part have a (longitudinal) cable transit axis. In an embodiment a first part of the cable transit axis (configured) at the engagement element top part and a second part of the cable transit axis (configured) at the side wall define a mutual angle selected from the range of 45-135°, such as 75-105°, especially 80-100°. In an embodiment, said angle is substantially 90°. Said angle may e.g. comprise a right angle. In contrast to that, for a bottom cable entry (known in the art) said angle would be a substantially straight angle.

Especially, along a longitudinal axis of the body (only) a part of the body (200) may comprise the cable transit, and especially a further part (along the longitudinal axis) of the body may not comprise the cable transit.

The cable transit, further, is especially configured for sealingly enclosing (a part of) the cable (provided in the cable transit). Hence, a longitudinal axis of the cable may (also) vary in the grommet element, and especially an angle formed by a (first) longitudinal axis of the cable at a first location (in the body) and a (second) longitudinal axis (of the cable) at a second location (in the engagement element) may correspond to said angle. Moreover, the grommet element especially is configured to change the course of the longitudinal axis of the cable (inside the grommet element).

The grommet element of the invention especially allows a side cable entry in a housing, especially in an electronic housing. The grommet element especially does not require a bottom cable entry known from prior art solutions. The grommet element may be used for cable entry in an outdoor lighting module without the need of complex integrated heat spreaders. The grommet element may further be used for cable entry from a luminaire without the provision of expensive tooled (milled) grooves in the luminaire housing. The grommet element may be inserted in a housing (see further below) without the need for additional tools.

The grommet element is especially flexible (see also below). A height of the grommet element may be defined by a shortest distance between an extreme of the projection (a part of the projection arranged most remote from the engagement element) and the first wall, especially wherein no external force acts upon the grommet element, especially in a stress-less condition of the grommet element). After inserting the grommet element in (a receptor unit) a(n) (electronic) housing (see further below), the grommet element may be compressed (deformed), especially wherein a shortest distance between the first wall and the extreme of the projection is smaller than the height of the grommet element (as defined above) (in a stress-less or non-deformed condition of the grommet element). The grommet element may be compressed as a result of the configuration of the rim and/or the projection.

The rim, especially, is flexible. The rim, may deflect or deform (from an original configuration) as a result of an external force acting on the rim. The rim is especially deflectable. The rim may comprise its original configuration when the external force is not acting on the rim (anymore) (i.e. in the stress-less condition). Also the projection may be flexible, especially deflectable and/or may deform. Herein, the terms "flexible" and "deflectable" may especially relate to being able to deform, especially elastically deform, as a result of an external force (and thus being able to regain substantially its original form when no external force is acting upon the element).

Because of the compression of the grommet element, especially of the projection and the rim, the rim may provide a sealing function, especially an IP6X, even more especially an IP66 function at the cable entry (when the grommet element is arranged in (a part of) the housing). The grommet element may be used for sealingly entering the cable in a housing, especially in an electronic housing.

Herein the terms "seal", "sealingly", etc. such as in the phrases "providing a seal", "sealingly connected", "sealingly entering", and the like relate to preventing an increase of water and/or dust, especially according to the IP65 or IP66 marking. For example in "sealingly entering the cable in the housing" the cable may enter the housing, but water and dust are prevented to enter the housing (especially at the location where the cable may enter the housing).

The term "projection" may also relate to more than one (different) projection. Likewise, the term "rim" may also relate to more than one (different) rim.

The projection(s) protrude from the second wall. The second wall may (also) comprise indentations, especially to provide the same technical effect. Especially, a body comprising a second wall, wherein projections protrude from the second wall relates to a body comprising a second wall comprising indentations. Herein this aspect is explained in relation to the projection(s) protruding from the second wall. The projection especially comprises a protrusion. The project may comprise any arbitrarily shape. The projection may comprise a pin (shape). The projection may comprise a dome (shape). In further embodiments, the projection comprises a rib (shape). Herein the term a projection may relate to more than one (different) projection.

In embodiments, the grommet element comprises two projections. In further embodiments, the grommet element comprises a plurality of (flexible) projections, such as 2-100, especially 2-50, such as 4-30. A plurality of projections may comprise a pattern (of projections protruding from the second wall). A projection may comprise a rib. Alternatively or additionally a plurality of projections may define a rib. In an embodiment, cable grommet element comprises a plurality of ribs. Especially, a projection, especially a rib may be configured extending transverse with respect to the second part of the cable transit axis. In further embodiments, the rib(s) extend(s) parallel with respect to the second part of the cable transit axis. The rib may especially extend from a first location at a perimeter of the second wall to a second location at the perimeter of the second wall. The rib may connect a first location at the side wall the with a second location at the side wall.

The cable grommet element may comprise a plurality of ribs, such as 2-20 ribs, especially 4-15 ribs, even more especially 4-10 ribs. Hence, in an embodiment, the cable grommet element comprises a plurality of (flexible) projections (ribs) protruding from the second wall (of the body), and (the projections) especially extending transverse with respect to the second part of the cable transit axis.

Herein, the term "rib" may be used to exemplify the projection in embodiments. However, the term "rib" may be substituted with the term "projection" in embodiments, and vice versa.

Herein, the "first wall" of the cable grommet may further (also) be indicated as "top wall". The "second wall" of the cable grommet may further (also) be indicated as "bottom wall". In the term "top part" the word "top" is only used for distinguishing purposes. It is not necessary that in any configuration, also not during operation, the top part is configured at the top. Likewise, this may apply to other terms herein.

Herein, the term "housing" especially relates to a housing wherein an electrical current may flow (through a device), such as a housing for an element that consumes electric energy, that generates energy, or that may be used to transport energy, and e.g. wherein a first power cable is connected to one or more further power cables. For the sake of clarity, most of the embodiments will be explained based on a housing for an electrical power consuming (or generating) element, especially a light providing element. Therefore, the housing is herein also sometimes indicated as "electronic housing ". The term "electronic housing" may thus in embodiments also be replaced by the term "housing".

Especially, the term "power consuming element" relates to an electronic device or other kind of electronics, especially of which the functionality may be susceptible to a presence of water. The term "a power consuming or generating element" may also relate to more than one (different) power consuming or generating element. The housing may for instance (also) comprise a power consuming element and a power generating element". The invention may also be used with respect to other kinds of (electric) housings and hence also provides solutions for these other type of (electric) houses. The housing may comprise one or more compartments. The housing may, e.g., comprise a receptor part (compartment) or a base part ("base") for receiving (a part of) the grommet element, especially the body of the grommet element, and another compartment or space (configured for), especially a sealable space (see below), comprising the electrical power consuming or generating element (and e.g. a part of the grommet element, especially comprising the engagement element). Herein the terms "base" and "base part" and "receptor part" such as in the phrases "base of the housing", "receptor part of the housing", etc. may be used interchangeably, especially relating to a part of the housing configured for receiving at least part of the body of the grommet element.

For sealingly entering the cable in the housing, the housing (especially the receptor part of the housing) may comprise a base top) and a receptor unit, especially for holding the body. The receptor part may further comprise or be associated with a fixating element, especially for fixating the body of the cable grommet element in the receptor unit. A distance between the fixating element and the base top may define a receptor unit height. The housing may further comprise a (sealable) space (a further compartment) adjacent to the base top (and opposite to receptor unit) for an electrical power consuming or generating element (to be shielded from water and dust ingress). The base top may further comprise a base top opening for providing the engagement element (comprising the cable) in said (sealable) space (to the electrical power consuming or generating element) (and from the receptor unit. In such a housing, the grommet element may at least partly be configured in the receptor unit, especially wherein the engagement element, especially including the alignment portion, is arranged protruding (in a direction away from the receptor part) through the opening in the base top ("the base top opening. In further embodiments, the housing may comprise the fixating element, especially wherein the fixating element is associated with the receptor unit. The fixating element may especially at least partly close the receptor unit, and especially fixate the body of the grommet element in the receptor unit. The receptor unit and the fixating element may define a first receptor unit opening, especially if the fixating element is associated with the receptor unit. Especially, in such (part of the) housing substantially the entire body of the grommet element may be configured in the receptor unit (of the receptor part) of the housing (wherein the engagement element, especially including the alignment portion, is arranged protruding through the base top opening, especially in a direction away from the receptor part, and especially wherein the cable (also) extends (from the receptor unit) from the first receptor unit opening (in a direction away from the receptor unit).

In the receptor unit, the grommet element may be arranged in a compressed state between the base top and the fixating element, wherein the rim may provide a seal(ing) (function) and may prevent water or dust to enter the space ((configured for) comprising the electrical power consuming or generating element). Herein, the association of the engagement element with the base top, especially the configuration of the cable grommet element in the receptor unit and protruding into the space may also be referred to as the "cable entry interface".

It is noted that the term "cable" may also relate to more than one (different) cable. Further, a cable may comprise (a) (conductive) wire(s). Hence the term cable may further relate one or more wires, such as two wires. Especially, the first cable end provided into the (sealable or sealed) space may be embodied by one or more wires, especially for functionally coupling with an electrical power consuming or generating element ("also referred to herein as "power consuming or generating element").

Especially a shape of the engagement element, especially of the perimeter of the engagement element may be selected based on a shape of the base top opening (see below). Further, the height of the grommet element (such as (a combination of) a height of the base wall and/or a height of the projection) may be selected based on a distance between the base top and the fixating element (and vice versa), especially to provide a compressed grommet element (in the receptor part). The engagement element may have a shape of a neck (for protruding through the base top opening). Hence, herein the engagement element may also be named a "neck" (of the grommet element). Hence the term "neck" relates to the engagement element.

The fixating element, the base top and the receptor unit may comprise three distinct elements providing together the receptor part comprising an at least partly closed receptor unit. Essentially such receptor part is especially configured for holding the grommet element, especially wherein the first cable end protrudes form an opening and the second cable end protrudes from another. Hence especially the receptor unit (also) comprises at least part of the first receptor unit opening (allowing the second cable end to extend from the receptor unit) and of a second receptor unit opening (allowing the engagement element (especially the first cable end) to extend from the receptor unit).

In embodiments, one or more of the fixating element and the t the base top comprise the receptor unit. In embodiments, the fixating element comprises the receptor unit. Hence, the fixating element may further comprise at least part of the first receptor opening. In embodiments the fixating element, further, comprises at least part of the second receptor opening. Especially said second receptor opening may be functionally connected to the base top opening (when the fixating element is associated with the base top).

Herein the term fixating element may (also) relate to more than one (different) fixating element.

Yet, in further embodiments, the base top comprises the receptor unit. In further embodiments, the base top may comprise at least part of the first receptor opening and (at least part of) the second receptor opening. Especially, in such embodiment, the top base opening comprises the second receptor opening (or vice versa).The base top may in embodiments be made as a single (shaped) element, e.g., by tooling a groove or a recess in a plate. Such groove or recess may comprise the receptor unit (see also below).

It is noted that the grommet element may also be arranged through the base top opening without having the fixating element associated with the receptor unit (yet). Especially, the grommet element, especially at least a part of the engagement element comprising the alignment portion may be configured to hold or clamp the grommet element in the top plate opening. The receptor unit may be configured to clamp the grommet element (see below). Hence, also receptor unit not (yet) associated with the fixating element is especially configured to receive and hold at least part of the grommet element. Especially, the fixating element is associated with the base top to compress the grommet element (in the receptor unit) and provide a sealed cable entry interface.

Herein the term a "sealed cable entry interface" especially relates to the cable entry interface (see above) wherein the (flexible) projection resiliently contacts the fixating element and wherein the (flexible) rim resiliently seals the base top opening.

In a further embodiment the body of the grommet element comprises measures to facilitate arranging the body in the receptor unit, and especially to keep (such as fixate/hold by the receptor unit) (at least part of) the body in the receptor unit. The side wall (of the grommet element) may e.g. comprise a concave shape. In embodiments, the wall comprises a depression. The side wall may comprise a convex shape. Especially, the side wall of the body may comprise a flexible protrusion to allow a compression (especially a deformation) of the body. Such compression may allow arranging the body in the receptor unit (using a force that may provide the deformation) and especially a successive decompression or deformation may provide that the receptor unit may clamp (fixate)

Especially, the term "a protrusion" may also relate to more than one (different) protrusion. The side wall may comprise a protrusion arranged at the top wall of the body. The side wall may (also) comprise a protrusion at the bottom wall of the body. Hence, in further embodiments, the side wall of the body comprises a v-shaped configuration to allow a compression of the body.

The protrusion(s) protrude from the side wall. The side wall may (also) comprise indentations, especially to provide the same technical effect. Especially, a body comprising a side wall, wherein protrusions protrude from the side wall relates to a body comprising a side wall comprising indentations. Herein this aspect is explained in relation to the protrusion(s) protruding from the side wall. The protrusion may comprise any arbitrarily shape. The protrusion may comprise a pin (shape). The protrusion may comprise a dome (shape). In further embodiments, the protrusion comprises a rib (shape). Herein the term a protrusion may relate to more than one (different) protrusion.

In embodiments, the grommet element comprises two protrusions. In further embodiments, the grommet element comprises a plurality of (flexible) protrusions, such as 2-100, especially 2-50, such as 4-30. A plurality of protrusions may comprise a pattern (of protrusions protruding from the side wall). A protrusion may comprise a rib. Alternatively or additionally a plurality of protrusions may define a rib. In an embodiment, cable grommet element comprises a plurality of ribs. Especially, a protrusion, especially a rib may be configured extending transverse with respect to the second part of the cable transit axis. In further embodiments, the rib(s) extend(s) parallel with respect to the second part of the cable transit axis. The rib may especially extend from a first location at a perimeter of the side wall to a second location at the perimeter of the side wall. The rib may connect a first location at the side wall with a second location at the side wall.

The cable grommet element may comprise a plurality of ribs, such as 2-20 ribs, especially 2-15 ribs, even more especially 2-10 ribs. Hence, in an embodiment, the cable grommet element comprises a plurality of (flexible) protrusions (ribs) protruding from the side wall (of the body), and (the protrusions) especially extending transverse with respect to the second part of the cable transit axis.

Herein, the term "rib" may be used to exemplify the protrusion in embodiments. However, the term "rib" may be substituted with the term "protrusion" in embodiments, and vice versa.

The term "cable transit" relates to a channel, a duct or a through-hole configured to receive (a part of) the cable or (already) comprising (a part of) the cable. Hence, the grommet element (without the cable) may comprise two openings or "exits" (for the cable). A first opening in the engagement element top part ("top part opening" or "first cable transit opening"), and a second opening in the side wall of the body. Especially, the first opening in the engagement element top part is configured in open or functional connection with second opening in the side wall (also referred to herein as "second cable transit opening"). The term "functional" connection is herein used for such connection, especially indicating that a cable may be configured in the grommet element from the second cable transit opening to the first cable transit opening. If no cable is present, the connection may comprise an open connection, and especially a duct, a channel or (through) hole may provide the open connection between the two openings. If a cable is present, the connection is a functional connection, and especially the cable transit may (sealingly) comprise the cable. The grommet element may encompass (a part of) the cable. The cable transit may especially be sealingly connected with the cable to prevent an ingress of water or dust along a wall of the cable (along a wall of the cable transit) Hence, especially the cable is sealingly connected with the grommet element to prevent water or dust ingress (via the second cable transit opening.

The cable grommet element may further comprise a sleeve protruding from the side wall of the body and configured in functional connection with the second cable transit opening, especially for extension of the cable away from the body. The sleeve is especially configured in line with the cable transit. The sleeve may (also) comprise a part of the cable transit. The sleeve may especially be configured remote from the receptor part of the housing (when the grommet element is configured in the receptor part of the housing). The sleeve may protect the cable from external impact that may break the cable. Especially, (also) the sleeve sealingly comprises (a part of) the cable.

Especially, to provide a sealingly connection between the cable and the grommet element, the cable may be chemically bound to the grommet element, especially to the cable transit. In further embodiments, the cable is physically bond to the cable transit, such as e.g. a press fit, or a mechanical connection locking a part of the cable surface to the grommet element sealingly. An adhesive may be configured between the cable and the cable transit. In further embodiments, the grommet element is bound to the cable. The grommet element may be molded over the cable. Especially, a strong bond or adhesion is configured between the cable and the grommet element, especially the cable transit. The grommet element and the cable may comprise substantially the same material to provide a very strong bond between the cable and the grommet element. The grommet element and the cable may comprise a same grade of material. In embodiments, the grommet element comprises a thermoplastic vulcanized material. A thermoplastic vulcanized material may especially comprise vulcanized compounds comprising a thermoplastic plastic and a rubber material. Especially, the material is vulcanized during compounding the plastic and rubber material. The thermoplastic material may comprise any arbitrarily thermoplastic plastic. Also the rubber material may comprise any arbitrarily rubber material, such as ethylene propylene diene monomer (EPDM) rubber, natural rubber, or a butyl rubber blend. Especially, the thermoplastic vulcanized material comprises polypropylene and EPDM rubber, and/or polypropylene - natural rubber, and/or polypropylene-butyl rubber. Especially, the thermoplastic vulcanized material comprises polypropylene- EPDM rubber. Thermoplastic vulcanized materials are e.g. also known under the brand names Sarlink, Thermolast A, Thermolast V, Hipex, Forprene, Termoton-V Vegaprene, Santoprene , and Viprene.

The grommet element may especially comprise Santoprene. In embodiments the cable comprises a thermoplastic vulcanized material, especially Santoprene. The grommet element may be formed from a single material. Hence, in embodiments the grommet element especially consists of a thermoplastic vulcanized material, especially Santoprene. In further embodiments, the grommet element comprises an overmolded cable grommet element, especially provided by overmolding a thermoplastic vulcanized material over a cable especially comprising a thermoplastic vulcanized material. In further embodiments, the grommet element comprises (solidified, especially vulcanized) liquid silicon rubber (LSR). LSR is widely used for sealing purposes. Injection molding may be used for a production of LSR components. In further embodiments, the grommet element comprises an overmolded cable grommet element, especially provided by overmolding LSR over a cable especially comprising LSR.

Hence, in an embodiment, the cable grommet element comprises a thermoplastic vulcanized material and the electricity cable comprises a thermoplastic vulcanized material, especially the electricity cable comprises the same thermoplastic vulcanized. Thus, the (electricity) cable is physically and/or chemically bound to the grommet element, for example especially in the cable transit, and especially in the sleeve.

When the grommet element is arranged in the receptor part of the electronic housing a seal may be provided between the receptor part of the housing and the (sealable/sealed) space (adjacent to the base top and opposite to the receptor unit) (configured for comprising the power consuming or generating element). The base of the housing may however, not be sealed from an exterior of the housing. In an embodiment, the grommet element therefore further comprises means to prevent ingress of water in the receptor part of the housing. In embodiments, the grommet element may comprise a water ingress shield arranged at the side wall, preventing ingress of water (jets) directed towards the receptor part of the electronic housing, especially along the body of the grommet element. In embodiments, the sleeve comprises the water ingress shield. The shield is especially configured at an end of the grommet element comprising the second cable transit opening and especially extending beyond the first wall and the second wall (of the grommet element).

Hence, in a further embodiment, the body comprises a first end of the body and a second end of the body defining a length of the body. Especially, the cable grommet element further comprises a water ingress shield configured at the second end of the body and protruding from the side wall. Especially, the second end of the body comprises the second cable transit opening. Hence, the shield may further be configured at an end of the sleeve. Essentially, the shield may be configured between the sleeve and the body.

Especially, the shield is configured in a plane perpendicular to the second part of the cable transit axis The ingress shield may shield the first receptor opening. The ingress shield may also comprise more than one (different) ingress shield.

The engagement element comprises a shape (of the engagement element) and a perimeter. Especially, the (engagement element) perimeter relates to a perimeter of an intersection of a plane arranged parallel to the base top with the engagement element. Said (engagement element) perimeter may comprise any arbitrarily shape. In an embodiment said perimeter comprises an elongated shape, such as an oval shape. In further embodiments, said perimeter comprises a circular shape. Yet, in other embodiments the perimeter comprises a rectangular, such as a square, shape. The rim may be configured along the (entire) perimeter of the engagement element. The rim may comprise an endless rim. Especially, a shape of the rim corresponds with the shape of said perimeter.

Especially, the perimeter comprises an elongated shape. Such elongated shape may comprise a longest center axis comprising a center of the elongated shape), especially an elongated axis. Especially a cross section of the engagement element comprises the elongated axis. The alignment portion especially protrudes from the engagement element is a direction parallel to the elongated axis. In further embodiments, a part of the body comprising the cable transit, the engagement element, and the alignment portion together define a hook (shaped) configuration. The hook configuration may especially allow to hook the cable grommet element around an edge of the base top opening, especially wherein the alignment portion is arrange at one side of the base top opening and the body is arranged at another side of the base top when the engagement element is arranged through the base top opening. The term "hook configuration" may especially relate to being curved or bent back at an angle, such as comprising (at least of part of) a U-shaped or a V-shape. The configuration does not necessary need to be symmetric. Essentially, an element comprising a hook configuration may be hooked around something.

In an embodiment, the side wall of the body comprises a second cable transit opening (of the cable transit) at a side of the grommet element, and the alignment portion protrudes from the engagement element side wall at the same side of grommet element. Hence, the alignment portion may protrude from the engagement element side wall from a same side as a side of the sidewall where the second cable transit opening is configured (of the cable transit).

The alignment portion may especially be hooked at the base top for inserting the engagement element in the engagement opening (see below). In further embodiments, the alignment portion is flexibly arranged with respect to the engagement element. The alignment portion may also be referred to herein as "nose" of the grommet element.

Hence, the invention provides in a further aspect a(n) (electronic) housing comprising (i) a cable grommet element (described herein) configured in at least part of the electronic housing, wherein the cable transit comprises the electricity cable, (ii) a base top and (iii) a receptor unit (for holding the body), wherein (a) the base top comprises a base top opening and (b) the body is arranged in the receptor unit, wherein the engagement element (including the alignment portion) is configured through the base top opening. Especially, (in the electronic housing) at least part of the engagement element and the alignment portion at one side of the base top and with at least part of the body configured at another side of the base top.

The electronic housing, especially, further comprises a fixating element (associated with the receptor unit), wherein the receptor unit and the fixating element define a first receptor unit opening, wherein the second cable end extends from the first receptor unit opening, wherein the (flexible) projection (rib) resiliently contacts the fixating element and wherein the (flexible) rim resiliently seals the base top opening.

In further embodiments, the cable grommet element comprises the water ingress shield and the water ingress shield is arranged at a side of the first receptor unit opening, and (the water ingress shield is) especially extending transverse to (the second part of) the cable transit axis. The water ingress shield may especially be arranged at a side of the first receptor unit opening remote from the receptor unit, especially to prevent (a spray of) water from entering the receptor unit. The water ingress shield and the receptor unit may (also) be arranged at the same side of the first receptor opening.

In an embodiment, the water ingress shield is arranged (directly) over the first receptor opening. In a further embodiment, the water ingress shield and the first receptor opening are configured at a mutual distance.

The electronic housing may further comprise an electrical power consuming or generating element, especially functionally coupled to the first cable end. The power consuming or generating element may further be shielded from water, in a sealed space. Hence, in a further embodiment, the electronic housing further comprises an electrical power consuming or generating element functionally coupled to the first cable end, and a lock-up element sealingly connected to the base top, wherein a sealed space comprising the power consuming or generating element is defined by the base top and lock-up element.

Especially, a sealing element may be configured between the lock-up element and the base top for sealingly connecting the lock-up element to the base top. In embodiments, (a part of the lock-up element) comprises a sealing element. In further embodiments, the sealing element and the lock-up element are two distinct elements. The sealing element may e.g. comprise a gasket or a kit.

A configuration of the lock-up element may especially be selected based on the power consuming or generating element. If the power consuming or generating element e.g. comprises a lighting element, the lockup element may especially comprise a light transmissive optical element. The lock-up element may e.g. comprise a color filter and/or may comprise a lens to focus the light or a diffusor to spread the light. The lock up element may comprise any arbitrarily shape (allowing enclosing the power consuming or generating element). Yet, if e.g. the power consuming or generating element comprises a radiation transmitter, the lock-up element may comprise a simple box-like shape and a material that does not block radiation. The lock-up element may further comprise a closure element.

In embodiments, the lock-up element comprises a light transmissive optical element, such as a light diffusing element or a lens element and optionally a closure element to hold light transmissive optical element. Such lock-up element may especially be used in an embodiment wherein the power consuming or generating element comprising a lighting device. A lighting device may e.g. comprise a fluorescent lamp, a halogen lamp, a light emitting diode ("LED"), a fluorescent tube, a neon lamps, a low pressure sodium lamp, etc..

In embodiments, the power consuming or generating element comprises a lighting device and the electronic housing comprises a lighting (outdoor) module. Hence, in further embodiments, the electronic housing comprises a lighting outdoor module, wherein the electrical power consuming or generating element comprises a lighting device, wherein the lock-up element comprises a light transmissive optical element, and optionally a closure element, and wherein a sealing element sealingly connects the lock-up element and the top base.

In embodiments, the power consuming or generating element comprises an LED, especially an LED board (comprising a plurality of LEDs and especially a driver). In further embodiments, the lock-up element comprises a lens element, and a closure element, and especially the sealing element comprises a gasket. In an embodiment, an LED board is functionally coupled to the first cable end, and the electronic housing further comprises a sealing element, a lens and a closure element, wherein the sealing element, the lens element and the closure element tare configured at the base top (at a side opposite to the receptor unit), wherein the closure element contacts the lens element, and the sealing element is configured between the lens element and the base top defining the sealed space (between the lens element and the base top) comprising the LED board.

In embodiments, the cable grommet element is arranged in a base plate comprising a groove (recess) for holding a part of the body of the grommet element and an opening configured in the top of the base plate, wherein the opening is in open connection with the groove and especially configured for receiving the engagement element (arranging at least part of the engagement element through the opening). In such embodiment the base plate provides the base top comprising the base top opening, and especially the groove comprises the receptor unit. The base plate may for instance function as a heat- sink. The base plate may comprise a heat-sink. In further embodiments, the base top comprises a heat spreader. When providing the grommet element into the groove, wherein the engagement element protrudes from the base top opening, the rim and the projection(s) may deform and/or deflect when a fixating element is associated with the receptor unit. The fixating element may (also) be comprised by (a part of) a luminaire. Hence, if the base plate comprising the grommet element (with the body arranged in the groove and the engagement element at least partly protruding trough said opening) is mounted at a luminaire (comprising the fixating element) an electronic housing according to the invention may be provided. In further embodiments, the electronic housing (also) comprises a heat spreader providing (at least) the receptor unit and the base top. Hence, the fixating element may at least be part of a luminaire. In embodiments, a luminaire comprises the fixating element. The receptor unit of the electronic housing may (also) already (at least partly) be closed by a fixating element before mounting the electronic housing. In further embodiments, an electronic housing comprising the fixating element is mounted at a luminaire.

In an embodiment, the electronic housing, comprising an LED outdoor module, comprises a grommet element (comprising the cable), a heat spreader, a sealing element, an LED board, a lens element and a closure element, wherein the heat spreader comprises (i) the base top (comprising the base top opening); (ii) a groove comprising the receptor unit (comprising the first receptor unit opening and the second receptor unit opening), wherein the second receptor unit opening comprises the base top opening, wherein the engagement element is at least partly arranged through the base top opening, wherein the LED board is functionally coupled to the first cable end, and wherein the sealing element sealingly connects the lens element with the heat spreader and wherein the lens element is arranged between the closure element and the sealing element (and wherein a sealed space comprising the LED boards by heat spreader and the lens element)

The module may be advantageously mounted at a luminaire (especially comprising the fixating element), especially wherein the receptor unit is associated with the luminaire, especially to compress the grommet and provide the sealed cable entry interface (wherein the (flexible) projection resiliently contacts the fixating element and wherein the (flexible) rim resiliently seals the base top opening. Optionally the LED outdoor module (already) comprises the fixating element, and especially the LED outdoor module (not yet mounted at a luminaire) (already) comprises the sealed cable entry interface

A production of the electronic housing may be less complex than a production of prior art electric houses, especially as a result of the grommet element of the invention. The grommet element is especially configured to easily slide and/or hook in a least a part of the housing comprising the receptor unit. Therefore, in a further aspect, the invention provides a method for providing a sealed electronic housing; the method comprising: providing a cable grommet element according to the invention, wherein the cable transit comprises the electricity cable; providing a base top comprising a base top opening and a receptor unit, wherein the base top is configured for holding at least part of the of the grommet element; and arranging at least part of the engagement element comprising the alignment element through the base top opening, wherein at least part of the body is configured in the receptor unit.

In the method, the grommet element is especially initially tilted relative to the base top to arrange at least part of the alignment portion at the base top via (through) the base top opening. Especially, the alignment portion of an embodiment of the grommet element wherein a part of the body comprising the cable transit, the engagement element, and the alignment portion (together) define a hook configuration may be hooked around an edge of the base top opening. Hence, in embodiments at least part of the alignment portion is hooked around the edge of the base top opening. Successively, the grommet element may be pulled back in a direction of the second cable end to further complete hooking of the alignment portion around the base top opening. Next the grommet element may be tilted back to provide the remainder of the engagement element in and partly through the base top opening and especially to align the top wall of the body with the base top.

In embodiments, successively a fixating element is associated with the receptor unit, especially wherein the grommet element is compressed between the fixating element and the base top and the rim provides the seal. Hence, the method may further comprise associating a fixating element with the receptor unit, therewith defining a first receptor unit opening, wherein the body is arranged in the receptor unit and the second cable end extends from the first receptor unit opening, at least one (flexible) projection resiliently contacts the fixating element and the (flexible) rim resiliently seals the base top opening.

After connecting the power consuming or generating element, the power consuming or generating element may further be protected from ingress of water and dust by sealingly coupling a lock-up element to shield the base top.

The inserting of the grommet element may be facilitated by flexibility of the grommet element (and also of the alignment portion). The flexibility may be the result of the material of the grommet element. The flexibility may also be affected by a configuration of the grommet element, especially a shape of the grommet element, and especially a shape of the alignment portion. In an embodiment, at least part of the alignment portion is configured tilted in a direction towards the top wall of the body, especially to facilitate arranging the engagement element through the base top opening. Especially, at least (a) part of the alignment portion comprises a slanted surface. Hence, in an embodiment at least (a) part of the alignment portion comprises a slanted surface, wherein a first shortest distance between a first location of the slanted surface and the first wall of the body is larger than a second shortest distance between a second location of the slanted surface and the first wall of the body, especially wherein the second location protrudes further from the engagement element side wall than the first location. Especially, a shortest distance between the first location and the engagement element side wall is smaller than a shortest distance between the second location and the engagement element side wall. Especially, said shortest distance between the first location (respectively the second location) and the engagement element side wall and between the first location (respectively the second location) and the first wall may be determined along two lines being arranged perpendicular to each other. A shape of the grommet element may further be selected to correspond to (a shape of) the receptor unit. A configuration of the side wall may (further) provide flexibility (deformability) of the grommet element (especially during inserting the engagement element in the base top opening). In embodiments, the side wall of the body may further comprise a resilient element, especially (also) to allow a movement of the first wall of the body relative to the second wall of the body. In embodiments, said resilient element comprises one or more local perforations. In further embodiments, the resilient element comprises one or more dents (especially protrusions, see also above). The wall may further comprise a V-shape or a U-shape. Hence the configuration of the side wall may be selected to provide a deformation of the body during arranging the engagement element through the base top opening and alternatively or additionally to allow arranging and to provide a fixation of at least part of the body in the receptor unit.

The grommet element may be produced by injection molding, especially wherein a part of the electricity cable is overmolded by the grommet element (see also above). Hence in a further aspect, the invention also provides a mold for providing a cable grommet element described herein, wherein the mold comprises a cavity configured to receive (i) a part of the electricity cable and (ii) a polymer to be injection molded over the part of the electricity cable, and wherein the cavity comprises a shape that corresponds to the body, the engagement element, and the (flexible) projection (as defined herein).

Hence, the inventive cable grommet element may use the overmolding technology to enable the cable assembly without the need of expensive grooves in the housing of the luminaire or the limitation of the LED module architecture with integrated heatsinks. The grommet element body itself may contributing to the IP66 function when compressed by the luminaire housing/heatsink enabling direct mounting of a LED module on the luminaire without additional precautions.

An overmolded cable grommet element especially consists of two parts built with the same grade of a thermoplastic vulcanized material, such as Santoprene. The thermoplastic vulcanized material may especially be suitable for outdoor environmental conditions; UV resistant. The thermoplastic vulcanized material may further be water resistant and may be resistant to operating temperatures of 100°C. The use of the same grade may especially enable a very strong bond / adhesion between the cable and the grommet element.

The grommet element's rim and projection(s) may contribute to the IP66 sealing of the cable entry interface, by compressed deformation. The design of the rim and ribs has been optimized to fulfil the IP66 function for more than 50,000 hours of lifetime.

It is noted that the devices described herein (electric house, the grommet element and the mold) are especially configured to mutually correspond. Further, the method especially relates to the devices. Hence, especially embodiments described in relation with one or more of the devices may also relate to embodiments of one or more of the other devices, and embodiments of the method, and vice versa. Elements described for the different devices may also be present in embodiments of other devices according to the invention.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts some general aspects of the grommet element;
Fig. 2 schematically depicts a cross section of a grommet element in an electronic housing.
Figs. 3-4 schematically depict some aspects of electronic housing;
Fig. 5 schematically depicts a mold of the invention.

The schematic drawings are not necessarily to scale.

### DETAILED DESCRIPTION OF THE EMBODIMENTS

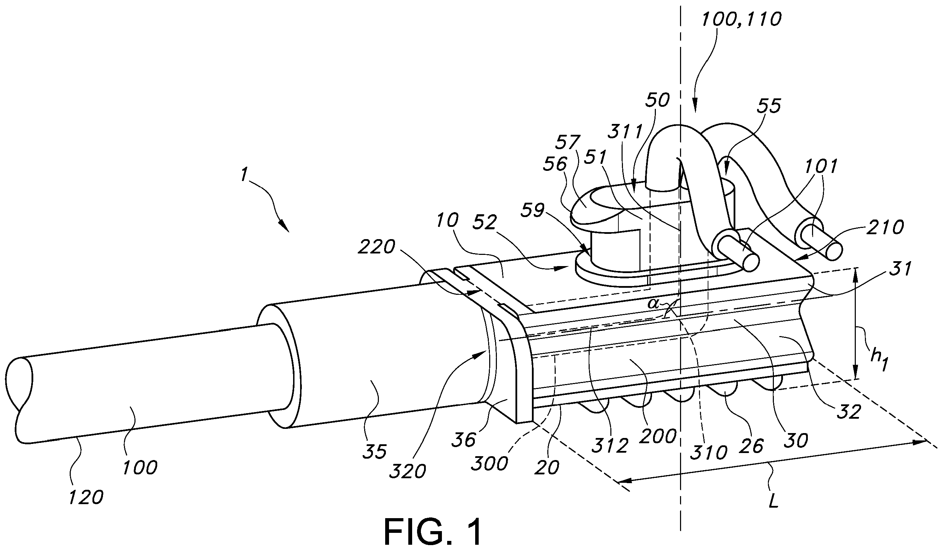

Fig. 1 schematically depicts an embodiment of a grommet element 1, comprising. The grommet element 1 comprises a body 200, an engagement element 50 and a cable transit 300. The body 200 comprises a first (or top) wall 10, a second (or bottom) wall 20 and a side wall 30 connecting the first wall 10 to the second wall 20. The grommet further comprises a (flexible) projection (such as rib) 26 protruding from the second wall 20 of the body 200. In the figures, the projection 26 is embodied by a rib 26

The grommet element 1 especially comprises at least one projection 26 configured at the second wall 20 and protruding in a direction away from the engagement element 50. Yet, embodiments may comprise a plurality of said projections (ribs) 26. The embodiment depicted in Fig. 1, e.g., comprises five 26 configured at the second wall 20 and protruding away from the engagement element 50. The height h1 of the grommet element 1 may especially be defined by a shortest distance between an extreme of the projection 26 and the first wall 10.

The engagement element comprises an engagement element side wall 51, an engagement element top part 55 and an alignment portion 56 protruding from the engagement element side wall 51. Said wall 51 further comprises a (flexible) rim 52 configured along a perimeter 59 of the engagement element side wall 51

The cable transit 300 is configured for transit of the electricity cable 100 from the side wall 30 to the engagement element top part 55 and is depicted by a dotted line because the embodiment of Fig. 1 comprises, especially encompassing (a part of) the cable 100. A first cable end 110, comprising two wires 101, extends from the engagement element top part 55 and the second cable end 120 extends from the side wall 30 of the body 200.

Herein, these wires 101 are also referred to as cable 100., and no discrimination is made between a cable 100 not showing the wires 101, and a cable 100 only represented by the wires 101.Especially, the cable transit 300 sealingly encloses the cable 100.

The cable transit 300 has a cable transit axis 310 over a length from the side wall 30 of the body 200 to the engagement element top part 55. The cable transit axis 310 is over its entire length especially no straight line. A mutual α may be defined between a first part 311 of the cable transit axis 310 arranged at the engagement element top part 55 and a second part 312 of the cable transit axis 310 arranged at the side wall 30. Said angle α may especially be selected from the range of 45-135°. In the depicted embodiment, the angle α is substantially a right angle. It is noted that in Fig. 1 the projections (ribs) 26 extend transverse with respect to the second part 312 of the cable transit axis 310.

In the figure, a first end 210 of the body 200 and a second end 220 of the body 200 (comprising the second cable transit opening 320) are depicted. Especially the first end 210 and the second end 220 define a length L of the body 200.

The embodiment, further comprises flexible protrusions 31 comprised by the side wall 30 to allow a compression of the body 200. The protrusions are arranged near the first and second wall 10,20 providing a concave shape, especially providing a V-shape 32. In further embodiments, one or more protrusion(s) 31 may be configured remote from the first and second wall 10,20, e.g. providing a convex shape.

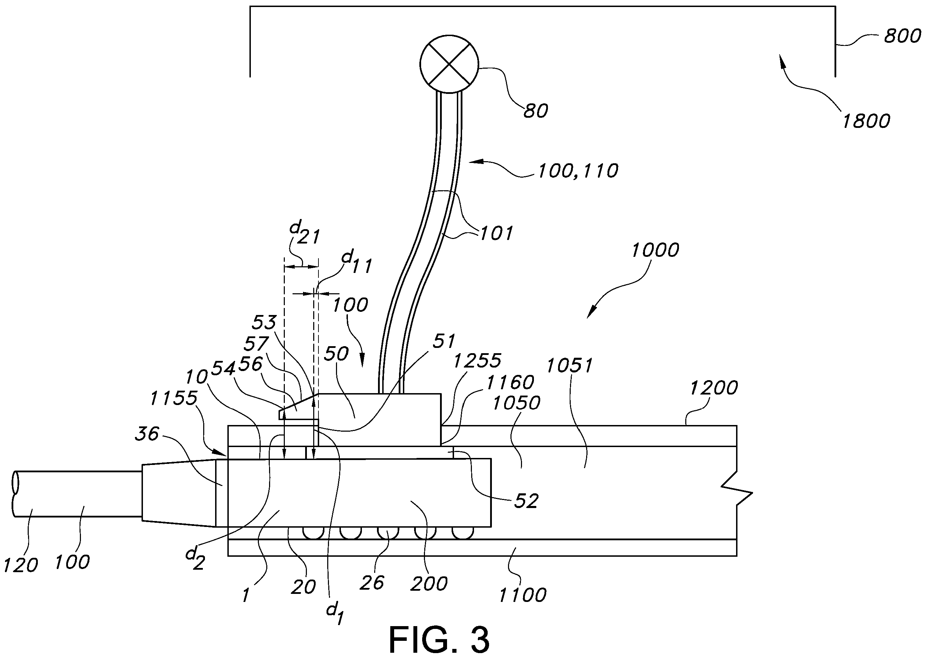

The figure, further shows an embodiment wherein a part of the body 200 (comprising the cable transit 300) and the engagement element 50 with the alignment portion 56 together define a U-shape or a hook configuration. This hooked configuration may be used when arranging the grommet element in the electric housing 1000 (see Fig. 3)

The embodiment further comprises a water ingress shield 36 configured at the second end 220 of the body 200 and protruding from the side wall 30. The water ingress shield 36 has a width that is larger than a width of the remainder of the grommet element 1. The water ingress shield 36 extends beyond a perimeter of the top wall 10 and beyond a perimeter of the bottom wall 20. After installing the grommet element in an electronic housing 1000, the shield 36 may prevent any water entering the receptor unit 1050 of the electronic housing. In the depicted embodiment, the shield is configured at an end of the sleeve 36, especially between the sleeve 36 and the body 200.

The cable 100 is especially physically and/or chemically bound to the grommet element 1, such as to the cable transit 300, and the sleeve 35. In specific embodiments, the grommet element 1 comprises a thermoplastic vulcanized material, such as Santoprene, and the cable 100 comprises the same thermoplastic vulcanized material. Especially, in such combination a bond between the cable 100 and the grommet element may be substantially complete. Such embodiment may also advantageously be provided by molding the grommet element 1 over the cable 100.

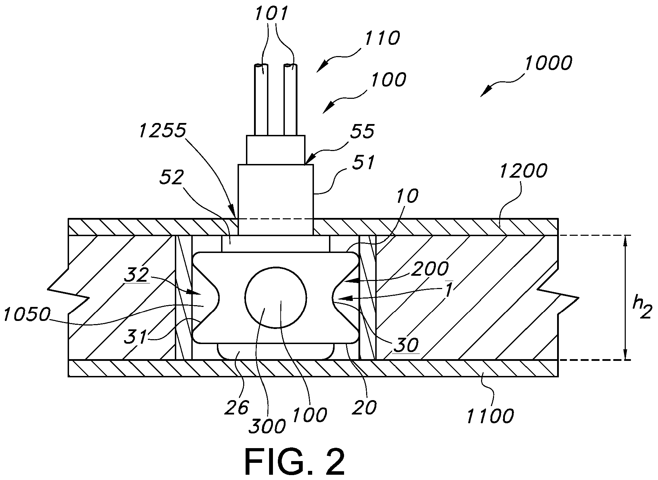

In Fig. 2 is schematically a cross section of a grommet element 1 in an electronic housing 1000 depicted. Herein the side wall 30 is completely enclosed in the receptor unit 1050 of the electronic housing 1000, and the engagement element 50 is protrudes from the base top 1200 and is configured through the base top opening 1255. This way the cable 100, especially comprising two wires 101, is provided to the electronic housing 1000 for connecting to a power consuming or generating element 300 (not shown). For introducing the grommet element in the electronic housing 1000, it may be advantageous to have a flexible grommet element 1. In the depicted embodiment, the side wall 30 of the grommet element 1 comprises a protrusion 31 to allow a deformation of the body 200, especially a deformation of the side wall 30. The figure further shows that the fixating element 1100 is associated with the receptor unit 1050. Because the rib 26 resiliently contacts the fixating element 1100, the rim 52 resiliently seals the base top opening 1255. Herein this is also indicated with phrases like the rim 52 in combination with the projection (rib) 26 especially provide the "sealed cable entry interface".

Fig. 2 also depicts the receptor unit height h2. Essentially, the receptor unit height h2 is especially smaller than the height h1 of the grommet element 1. To provides the sealed cable entry interface.

Fig. 3 depicts some further elements of the electronic housing 1000. The housing comprises the cable grommet element 1. The housing further comprises a fixating element 1100, a base top 1200 and a receptor unit 1050. The receptor unit 1050 comprises (at least part of) the first receptor unit opening 1155 through which the grommet element 1 is arranged. Especially the receptor unit 1050 and the fixating element 1100 define the first receptor unit opening 1155. The grommet element 1 is also arranged through the second receptor unit opening 1160, in this case comprising the base top opening 1255. The grommet element 1 is especially arranged such that the engagement element 50 is configured through the base top opening 1255 and especially, the second cable end 120 protrudes from the first receptor unit opening 1155. In the given embodiment a part of the alignment portion 56 is configured tilted in a direction towards the first wall 10 of the body 200. Such a configuration may further facilitate arranging the grommet element through the base top opening 1255.

In the embodiment, the alignment portion 56 comprises a slanted surface 57 (see also Fig 1.). The slanted surface 57 comprises a first location 53 and a second location 54 protruding further from the engagement element side wall 51 than the first location 53. In Fig. 3 the extend of protruding is schematically depicted by a shortest distance d11 between the first location 53 of the slanted surface 57 and a shortest distance d21 between the second location 54 of the slanted surface 57. Because of the slanted surface 57, especially a first shortest distance d1 between the first location 53 of the slanted surface 57 and the first wall 10 of the body 200 is larger than a second shortest distance d2 between the second location 54 of the slanted surface 57 and the first wall 10 of the body 200. Especially because above described distances d1, d2, d11, d21 comprise shortest distances, the distances may be measured along lines (see the depicted arrows) that are arranged mutually perpendicular to each other.

When the grommet element 1 is configured in the electronic housing 1000 (comprising the fixating element 1100) the alignment portion 56 is arranged at a first side of the base top 1200 and the rim 52 is arranged at another side of the base top 1200. Because at least one projection (rib) 26 (in the figure all five projections are ribs 26) resiliently contacts the fixating element 1100, the rim 52 resiliently seals the base top opening 1255 and provides the sealed cable entry interface. Fig. 3 further depicts an embodiment comprising the water ingress shield 36 arranged at a side of the first receptor unit opening 1155. The water ingress shield 36 especially extends transverse to (the second part 312 of) the cable transit axis 310. In the figure an electrical power consuming or generating element 80 is functionally coupled to the first cable end 110, especially to two wires 11.

Further very schematically a lock-up element 800 is depicted that may sealingly be connected (see arrow) to the base top 1200 to define a sealed space 1800 comprising the power consuming or generating element 80 by the base top 1200 and lock-up element 800. It is noted that since the lock-up element is not connected to the base top 1200 the space indicated by the reference number 1800 is still open and not sealed.

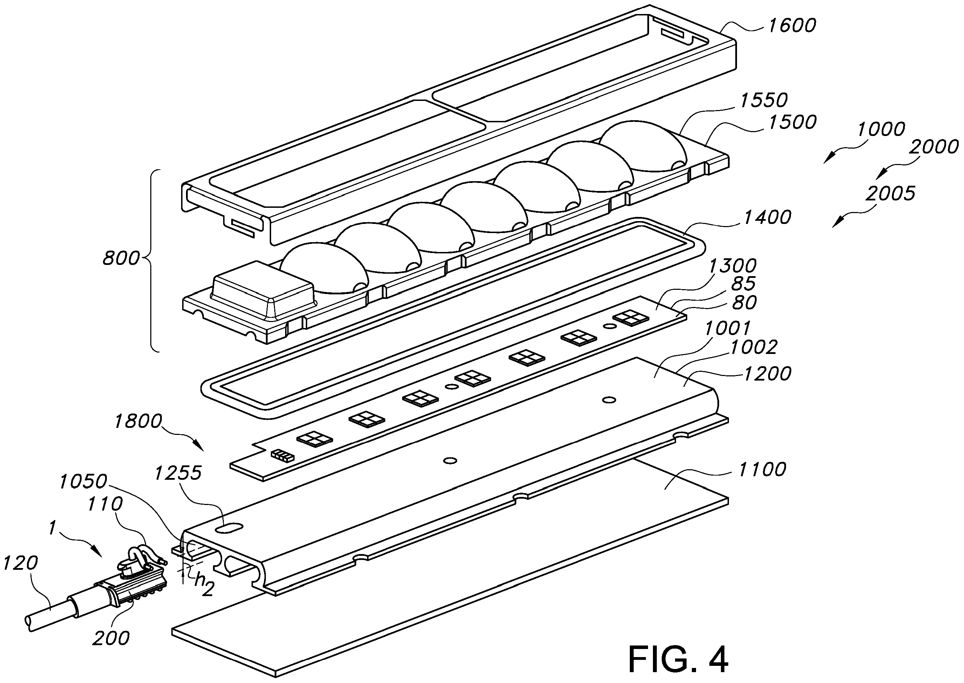

In Fig. 4 schematically an exploded view of an electronic housing 1000, comprising a lighting outdoor module 2000 is depicted. The embodiment depicts an LED outdoor module 2005. In the embodiment the electrical power consuming or generating element 80 comprises a lighting device 85, especially an LED board 1300. The lock-up element 800 comprises a light transmissive optical element 1500, especially a lens 1550 and a closure element 1600. After assembling the elements, the sealing element 1400 will sealingly connects the lock-up element 800 and the top base 1200.

In embodiments, the fixating element 1100 may be comprised by the electronic housing 1000. In further embodiments a fixating element 1100 may be associated to the receptor unit 1050 at a later stage, e.g. when mounting the lighting outdoor module 2000 at a luminaire (not shown) which comprises a fixating element 1100.

In the embodiment a base plate 1001 comprises the top plate 1200. The base plate further comprises the receptor unit 1050. Especially, the base plate comprises a heat spreader 1002.

It is noted that for better understanding the different elements are not connected. The grommet element 1 is for instance also not configured through the top base opening 1255, and also the cable 100 is connected to the power consuming or generating element 80.

An oval cut-out 1255 on top of the heatsink 1002 allows the "neck" 50 of the grommet element 1 and thus the wires 101 to enter and reach the Light Emitting Surface 80. The alignment portion (a "hook") 56 has been configured at the neck 50 of the grommet element 1 to align the grommet element 1 during assembly in the cut-out 1255 of the base plate 1001/heat spreader 1002 and keep it in place during handling and transportation. Two dents 31 configured at the side wall 30 reduce the force required to insert and assemble the grommet element 1 in the base plate 1001. The water ingress shield 36 may comprise two flaps. These two flaps at first receptor unit opening 1155 prevent direct exposure to waterjets.

The grommet element 1 is inserted from the bottom, first from an angled position the nose 56 is inserted through the cut-out 1255, then the grommet element 1 is slightly pulled outwards in a direction of the second cable end 120 to hook the nose 56 in the cut-out 1255, especially around an edge of the base top opening 1255, and successively the cable grommet 1 is pushed from the bottom, such that the rest of the grommet element neck 50 is inserted.

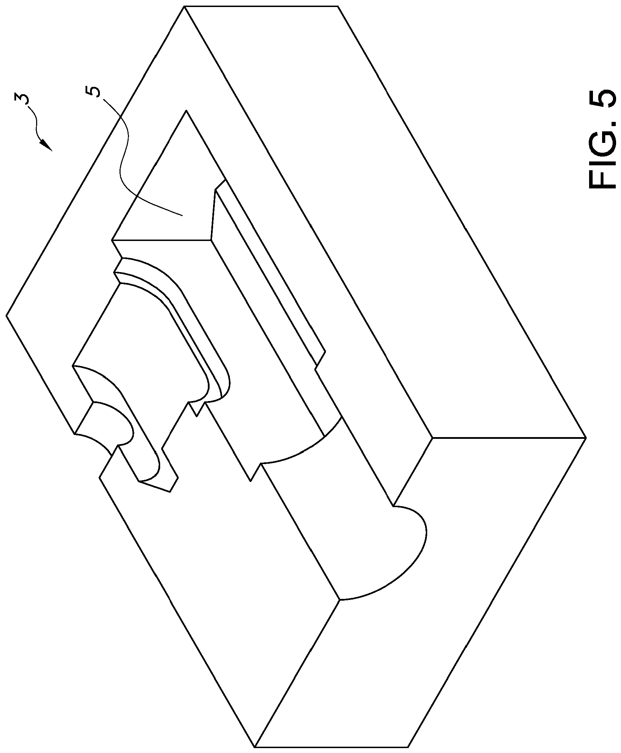

In Fig. 5 schematically a part of a mold 3 according to the invention is depicted. The mold may be used for providing a cable grommet element 1. The mold 3 comprises a cavity 5 configured to receive a part of the electricity cable 100 and a polymer to be injection molded over the part of the electricity cable 100. Especially, the cable 100 may first be introduced and successively the polymer. The polymer will further fill the cavity 5. The cavity 5 at least comprises a shape that corresponds to the body 200, the engagement element 50 and the (flexible) projection(s) 26 of the grommet element 1. It is noted that in the schematic figure the projection 26 is not visible.

The term plurality especially refers to two or more.

The term "substantially" herein, such as "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A cable grommet element (1) for sealed entry of an electricity cable (100) into an housing (1000), wherein the grommet element (1) is configured to be physically and/or chemically bound to the electricity cable (100), wherein the grommet element (1) comprises a body (200), an engagement element (50), a flexible projection (26), and a cable transit (300), wherein:
- the body (200) comprises a first wall (10), a second wall (20), and a side wall (30) connecting the first wall (10) to the second wall (20);
- the engagement element (50) protrudes from the first wall (10) of the body (200), wherein the engagement element (50) comprises an engagement element side wall (51) and an engagement element top part (55), wherein the engagement element side wall (51) comprises a flexible rim (52) configured along a perimeter (59) of the engagement element side wall (51); wherein the engagement element (50) further comprises an alignment portion (56) protruding from the engagement element side wall (51);
- the flexible projection (26) protrudes from the second wall (20) of the body (200); and
- the cable transit (300) is configured for transit of the electricity cable (100) from the side wall (30) of the body (200) to the engagement element top part (55).

2. The cable grommet element (1) according to claim 1, wherein the cable transit (300) comprises the electricity cable (100), wherein a first cable end (110) extends from the engagement element top part (55) and the second cable end (120) extends from the side wall (30) of the body (200).

3. The cable grommet element (1) according to claim 2, wherein the cable grommet element (1) comprises a thermoplastic vulcanized material and wherein the electricity cable (100) comprises a thermoplastic vulcanized material, and wherein the electricity cable (100) is physically and/or chemically bound to the grommet element (1).

4. The cable grommet element (1) according to any of the preceding claims, wherein the cable transit (300) over a length from the side wall (30) of the body (200) to the engagement element top part (55) has a cable transit axis (310), wherein a first part (311) of the cable transit axis (310) at the engagement element top part (55) and a second part (312) of the cable transit axis (310) at the side wall (30) define a mutual angle (α) selected from the range of 45-135°.

5. The cable grommet element (1) according to any of the preceding claims, wherein the side wall (30) of the body (200) comprises a flexible protrusion (31) to allow a compression of the body (200).

6. The cable grommet element (1) according to any of the preceding claims, wherein (i) a part of the body (200) comprising the cable transit (300), (ii) the engagement element (50), and (iii) the alignment portion (56) together define a hook configuration.

7. The cable grommet element (1) according to any of the preceding claims, wherein at least part of the alignment portion (56) comprises a slanted surface (57), wherein a first shortest distance (d1) between a first location (53) of the slanted surface (57) and the first wall (10) of the body (200) is larger than a second shortest distance (d2) between a second location (54) of the slanted surface (57) and the first wall (10) of the body(200), wherein the second location (54) protrudes further from the engagement element side wall (51) than the first location (53).

8. The cable grommet element (1) according to any of the preceding claims, wherein the cable grommet element (1) comprises a plurality of flexible projections (26) extending transverse with respect to a second part (312) of the cable transit axis (310) at the side wall (30) and protruding from the second wall (20) of the body (200), wherein the body (200) comprises a first end (210) of the body (200) and a second end (220) of the body (200) defining a length (L) of the body (200), and wherein the cable grommet element (1) further comprises a water ingress shield (36) extending transverse to the second part (312) of the cable transit axis (310) and configured at the second end (220) of the body (200) and protruding from the side wall (30).

9. A housing (1000) comprising (i) a cable grommet element (1) according to any of the preceding claims configured in at least part of the housing (1000), wherein the cable transit (300) comprises the electricity cable (100), (ii) a base top (1200) and (iii) a receptor unit (1050), wherein
- the base top (1200) comprises a base top opening (1255);
- the body (200) is arranged in the receptor unit (1050), wherein the engagement element (50) is configured through the base top opening (1255).

10. The housing (1000) according to claim 9, further comprising a fixating element (1100), wherein the receptor unit (1050) and the fixating element (1100) define a first receptor unit opening (1155), wherein the second cable end (120) extends from the first receptor unit opening (1155), wherein the flexible projection (26) resiliently contacts the fixating element (1100) and wherein the flexible rim (52) resiliently seals the base top opening (1255).

11. The housing (1000) according to any of the preceding claim 10, wherein the cable grommet element (1) comprises the water ingress shield (36) according to claim 8, and wherein the water ingress shield (36) is arranged at a side of the first receptor unit opening (1155).

12. The housing (1000) according to any of the preceding claims 9-11, further comprising an electrical power consuming or generating element (80) functionally coupled to the first cable end (110), and a lock-up element (800) sealingly connected to the base top (1200), wherein a sealed space (1800) comprising the power consuming or generating element (80) is defined by the base top (1200) and lock-up element (800).

13. The housing (1000) according to claim 12, comprising a lighting outdoor module (2000), wherein the electrical power consuming or generating element (80) comprises a lighting device (85), wherein the lock-up element (800) comprises a light transmissive optical element (1500), and optionally a closure element (1600), and wherein a sealing element (1400) sealingly connects the lock-up element (800) and the top base (1200).

14. A method for providing a sealed housing (1000), the method comprising:
- providing a cable grommet element (1) according to any of the preceding claims 1-8, wherein the cable transit (300) comprises the electricity cable (100);
providing a base top (1200) comprising a base top opening (1255) and a receptor unit (1050), wherein the base top (1200) is configured for holding at least part of the of the grommet element (1); and
arranging at least part of the engagement element (50) comprising the alignment element (56) through the base top opening (1255), wherein at least part of the body (200) is configured in the receptor unit (1050).

15. A mold (3) for providing a cable grommet element (1) according to any of the claims 1-8, wherein the mold comprises a cavity (5) configured to receive (i) a part of the electricity cable (100) and (ii) a polymer to be injection molded over the part of the electricity cable (100), and wherein the cavity comprises a shape that corresponds to the body (200), the engagement element (50), and the flexible projection (26).

## Patentansprüche

1. Kabeldurchführungselement (1) für einen abgedichteten Eintritt eines Stromkabels (100) in ein Gehäuse (1000), wobei das Durchführungselement (1) konfiguriert ist, um physisch und/oder chemisch an das Stromkabel (100) gebunden zu sein, wobei das Durchführungselement (1) einen Körper (200), ein Einführungselement (50), einen biegsamen Vorsprung (26) und einen Kabelübergang (300) umfasst,
wobei:
- der Körper (200) eine erste Wand (10), eine zweite Wand (20) und eine Seitenwand (30), die die erste Wand (10) mit der zweiten Wand (20) verbindet, umfasst;
- das Einführungselement (50) von der ersten Wand (10) des Körpers (200) vorragt, wobei das Einführungselement (50) eine Einführungselementseitenwand (51) und ein Einführungselementoberteil (55) umfasst, wobei die Einführungselementseitenwand (51) einen biegsamen Rand (52) umfasst, der entlang eines Umfangs (59) der Einführungselementseitenwand (51) konfiguriert ist; wobei das Einführungselement (50) weiter einen Ausrichtungsabschnitt (56), der von der Einführungselementseitenwand (51) vorragt, umfasst;
- der biegsame Vorsprung (26) von der zweiten Wand (20) des Körpers (200) vorragt; und
- der Kabelübergang (300) für den Transit des Stromkabels (100) von der Seitenwand (30) des Körpers (200) zu dem Einführungselementoberteil (55) konfiguriert ist.

2. Kabeldurchführungselement (1) nach Anspruch 1, wobei der Kabelübergang (300) das Stromkabel (100) umfasst, wobei sich ein erstes Kabelende (110) von dem Einführungselementoberteil (55) erstreckt, und sich das zweite Kabelende (120) von der Seitenwand (30) des Körpers (200) erstreckt.

3. Kabeldurchführungselement (1) nach Anspruch 2, wobei das Kabeldurchführungselement (1) ein vulkanisiertes Thermoplastmaterial umfasst, und wobei das Stromkabel (100) ein vulkanisiertes Thermoplastmaterial umfasst, und wobei das Stromkabel (100) physisch und/oder chemisch an das Durchführungselement (1) gebunden ist.

4. Kabeldurchführungselement (1) nach einem der vorstehenden Ansprüche, wobei der Kabelübergang (300) über eine Länge von der Seitenwand (30) des Körpers (200) zu dem Einführungselementoberteil (55) eine Kabelübergangsachse (310) aufweist, wobei ein erster Teil (311) der Kabelübergangsachse (310) an dem Einführungselementoberteil (55) und ein zweiter Teil (312) der Kabelübergangsachse (310) an der Seitenwand (30) miteinander einen Winkel (α) bilden, der aus dem Bereich von 45 bis 135° ausgewählt ist.

5. Kabeldurchführungselement (1) nach einem der vorstehenden Ansprüche, wobei die Seitenwand (30) des Körpers (200) einen biegsamen Vorsprung (31) umfasst, um eine Kompression des Körpers (200) zu erlauben.

6. Kabeldurchführungselement (1) nach einem der vorstehenden Ansprüche, wobei (i) ein Teil des Körpers (200), der den Kabelübergang (300) umfasst, (ii) das Einführungselement (50) und (iii) der Ausrichtungsabschnitt (56) gemeinsam eine Hakenkonfiguration definieren.

7. Kabeldurchführungselement (1) nach einem der vorstehenden Ansprüche, wobei mindestens ein Teil des Ausrichtungsabschnitts (56) eine schräge Oberfläche (57) umfasst, wobei ein erster kürzester Abstand (d1) zwischen einer ersten Stelle (53) der schrägen Oberfläche (57) und der ersten Wand (10) des Körpers (200) größer ist als ein zweiter kürzester Abstand (d2) zwischen einer zweiten Stelle (54) der schrägen Oberfläche (57) und der ersten Wand (10) des Körpers (200),
wobei die zweite Stelle (54) weiter aus der Einführungselementseitenwand (51) vorragt als die erste Stelle (53).

8. Kabeldurchführungselement (1) nach einem der vorstehenden Ansprüche,
wobei das Kabeldurchführungselement eine Vielzahl biegsamer Vorsprünge (26) umfasst, die sich quer zu einem zweiten Teil (312) der Kabelübergangsachse (310) an der Seitenwand (30) erstrecken und von der zweiten Wand (20) des Körpers (200) vorragen, wobei der Körper (200) ein erstes Ende (210) des Körpers (200) umfasst, und ein zweites Ende (220) des Körpers (200) eine Länge (L) des Körpers (200) definiert, und wobei das Kabeldurchführungselement (1) weiter eine Wassereindringabschirmung (36) umfasst, die sich quer zu dem zweiten Teil (312) der Kabelübergangsachse (310) erstreckt und an dem zweiten Ende (220) des Körpers (200) konfiguriert ist und aus der Seitenwand (30) vorragt.

9. Gehäuse (1000), das (i) ein Kabeldurchführungselement (1) nach einem der vorstehenden Ansprüche umfasst, das in mindestens einem Teil des Gehäuses (1000) konfiguriert ist, wobei der Kabelübergang (300) das Stromkabel (100), (ii) eine Basisoberseite (1200) und (iii) eine Empfängereinheit (1050) umfasst, wobei
die Basisoberseite (1200) eine Basisoberseitenöffnung (1255) umfasst;
der Körper (200) in der Empfängereinheit (1050) eingerichtet ist, wobei das Einführungselement (50) durch die Basisoberseitenöffnung (1255) konfiguriert ist.

10. Gehäuse (1000) nach Anspruch 9, das weiter ein Befestigungselement (1100) umfasst, wobei die Empfängereinheit (1050) und das Befestigungselement (1100) eine erste Empfängereinheitsöffnung (1155) bilden, wobei sich das zweite Kabelende (120) von der ersten Empfängereinheitsöffnung (1155) erstreckt, wobei der biegsame Vorsprung (26) das Befestigungselement (1100) federnd kontaktiert, und wobei der biegsame Rand (52) die Basisoberseitenöffnung (1255) federnd abdichtet.

11. Gehäuse (1000) nach einem dem vorstehenden Anspruch 10, wobei das Kabeldurchführungselement (1) eine Wassereindringabschirmung (36) nach Anspruch 8 umfasst, und wobei die Wassereindringabschirmung (36) an einer Seite der ersten Empfängereinheitsöffnung (1155) eingerichtet ist.

12. Gehäuse (1000) nach einem der Ansprüche 9 bis 11, das weiter ein Strom verbrauchendes oder erzeugendes Element (80) umfasst, das funktional mit dem ersten Kabelende (110) gekoppelt ist, und ein Absperrelement (800), das abdichtend mit der Basisoberseite (1200) verbunden ist, wobei ein abgedichteter Raum (1800), der das Strom verbrauchende oder erzeugende Element (80) umfasst, von der Basisoberseite (1200) und dem Absperrelement (800) definiert ist.

13. Gehäuse (1000) nach Anspruch 12, das ein Beleuchtungsaußenmodul (2000) umfasst, wobei das Strom verbrauchende oder erzeugende Element (80) eine Beleuchtungsvorrichtung (85) umfasst, wobei das Absperrelement (800) ein Licht durchlässiges optisches Element (1500) umfasst, und optional ein
Verschlusselement (1600), und wobei das abdichtende Element (1400) das Absperrelement (800) und die Basisoberseite (1200) abdichtend verbindet.

14. Verfahren zum Bereitstellen eines abgedichteten Gehäuses (1000), wobei das Verfahren umfasst:
- Bereitstellen eines Kabeldurchführungselements (1) nach einem der Ansprüche 1 bis 8, wobei der Kabelübergang (300) das Stromkabel (100) umfasst;
Bereitstellen einer Basisoberseite (1200), die eine Basisoberseitenöffnung (1255) und eine Empfangseinheit (1050) umfasst, wobei die Basisoberseite (1200) konfiguriert ist, um mindestens einen Teil des Durchführungselements (1) zu halten; und
Einrichten mindestens eines Teils des Einführungselements (50), das das Ausrichtungselement (56) umfasst, durch die Basisoberseitenöffnung (1255), wobei mindestens ein Teil des Körpers (200) in der Empfängereinheit (1050) konfiguriert ist.

15. Form (3) zum Bereitstellen eines Kabeldurchführungselements (1) nach einem der Ansprüche 1 bis 8, wobei die Form einen Hohlraum (5) umfasst, der konfiguriert ist, um (i) einen Teil des Stromkabels (100) aufzunehmen, und (ii) ein Polymer, das über den Teil des Stromkabels (100) spritzgegossen werden soll, und wobei der Hohlraum eine Form umfasst, die dem Körper (200), dem Einführungselement (50) und dem biegsamen Vorsprung (26) entspricht.

## Revendications

1. Elément passe-câble (1) pour une entrée scellée d'un câble d'électricité (100) dans un boîtier (1000), dans lequel l'élément passe-câble (1) est configuré pour être physiquement et/ou chimiquement lié au câble d'électricité (100), dans lequel l'élément passe-câble (1) comprend un corps (200), un élément d'engagement (50), une saillie souple (26), et un passage de câble (300), dans lequel :
- le corps (200) comprend une première paroi (10), une seconde paroi (20) et une paroi latérale (30) reliant la première paroi (10) à la seconde paroi (20) ;
- l'élément d'engagement (50) est saillant depuis la première paroi (10) du corps (200), dans lequel l'élément d'engagement (50) comprenant une paroi latérale d'élément d'engagement (51) et une partie haute d'élément d'engagement (55), dans lequel la paroi latérale d'élément d'engagement (51) comprend une jante souple (52) configurée le long d'un périmètre (59) de la paroi latérale d'élément d'engagement (51) ; dans lequel l'élément d'engagement (50) comprend en outre une portion d'alignement (56) saillante depuis la paroi latérale d'élément d'engagement (51) ;
- la saillie souple (26) est saillante depuis la seconde paroi (20) du corps (200) ; et
- le passage de câble (300) est configuré pour le passage du câble d'électricité (100) de la paroi latérale (30) du corps (200) à la partie haute d'élément d'engagement (55).

2. Elément passe-câble (1) selon la revendication 1, dans lequel le passage de câble (300) comprend le câble d'électricité (100), dans lequel une première extrémité de câble (110) s'étend depuis la partie haute d'élément d'engagement (55) et la seconde extrémité de câble (120) s'étend depuis la paroi latérale (30) du corps (200).

3. Elément passe-câble (1) selon la revendication 2, dans lequel l'élément passe-câble (1) comprend un matériau vulcanisé thermoplastique et dans lequel le câble d'électricité (100) comprend un matériau vulcanisé thermoplastique, et dans lequel le câble d'électricité (100) est physiquement et/ou chimiquement lié à l'élément passe-câble (1).

4. Elément passe-câble (1) selon l'une quelconque des revendications précédentes, dans lequel le passage de câble (300) sur une longueur depuis la paroi latérale (30) du corps (200) à la partie haute d'élément d'engagement (55) a un axe de passage de câble (310), dans lequel une première partie (311) de l'axe de passage de câble (310) à la partie haute d'élément d'engagement (55) et une seconde partie (312) de l'axe de passage de câble (310) à la paroi latérale (30) définissent un angle mutuel (a) sélectionné dans la plage de 45 à 135°.

5. Elément passe-câble (1) selon l'une quelconque des revendications précédentes, dans lequel la paroi latérale (30) du corps (200) comprend une saillie souple (31) pour permettre une compression du corps (200).

6. Elément passe-câble (1) selon l'une quelconque des revendications précédentes, dans lequel (i) une partie du corps (200) comprenant le passage de câble (300), (ii) l'élément d'engagement (50), et (iii) la portion d'alignement (56) définissent ensemble une configuration de crochet.

7. Elément passe-câble (1) selon l'une quelconque des revendications précédentes, dans lequel au moins une partie de la portion d'alignement (56) comprend une surface inclinée (57), dans lequel une première distance la plus courte (dl) entre un premier emplacement (53) de la surface inclinée (57) et la première paroi (10) du corps (200) est plus grande qu'une seconde distance la plus courte (d2) entre un second emplacement (54) de la surface inclinée (57) et la première paroi (10) du corps (200), dans lequel le second emplacement (54) est saillant depuis la paroi latérale d'élément d'engagement (51) davantage que le premier emplacement (53).

8. Elément passe-câble (1) selon l'une quelconque des revendications précédentes, dans lequel l'élément passe-câble (1) comprend une pluralité de saillies souples (26) s'étendant transversalement par rapport à une seconde partie (312) de l'axe de passage de câble (310) à la paroi latérale (30) et saillantes depuis la seconde paroi (20) du corps (200), dans lequel le corps (200) comprend une première extrémité (210) du corps (200) et une seconde extrémité (220) du corps (200) définissant une longueur (L) du corps (200), et dans lequel l'élément passe-câble (1) comprend en outre une protection anti-infiltration d'eau (36) s'étendant transversalement à la seconde partie (312) de l'axe de passage de câble (310) et configurée à la seconde extrémité (220) du corps (200) et saillante depuis la paroi latérale (30).

9. Boîtier (1000) comprenant (i) un élément passe-câble (1) selon l'une quelconque des revendications précédentes configuré dans au moins une partie du boîtier (1000), dans lequel le passage de câble (300) comprend le câble d'électricité (100), (ii) un socle (1200) et (iii) une unité réceptrice (1050), dans lequel
- le socle (1200) comprend une ouverture de socle (1255) ;
- le corps (200) est agencé dans l'unité réceptrice (1050), dans lequel l'élément d'engagement (50) est configuré à travers l'ouverture de socle (1255).

10. Boîtier (1000) selon la revendication 9, comprenant en outre un élément de fixation (1100), dans lequel l'unité réceptrice (1050) et l'élément de fixation (1100) définissent une première ouverture d'unité réceptrice (1155), dans lequel la seconde extrémité de câble (120) s'étend depuis la première ouverture d'unité réceptrice (1155), dans lequel la saillie souple (26) est en contact élastique avec l'élément de fixation (1100) et dans lequel la jante souple (52) scelle élastiquement l'ouverture de socle (1255).

11. Boîtier (1000) selon l'une quelconque de la revendication précédente 10, dans lequel l'élément passe-câble (1) comprend la protection anti-infiltration d'eau (36) selon la revendication 8, et dans lequel la protection anti-infiltration d'eau (36) est agencée à un côté de la première ouverture d'unité réceptrice (1155).

12. Boîtier (1000) selon l'une quelconque des revendications 9 à 11, comprenant en outre un élément de consommation ou de génération d'énergie électrique (80) couplé fonctionnellement à la première extrémité de câble (110), et un élément de pontage (800) relié par scellement au socle (1200), dans lequel un espace scellé (1800) comprenant l'élément de consommation ou de génération d'énergie (80) est défini par le socle (1200) et l'élément de pontage (800).

13. Boîtier (1000) selon la revendication 12, comprenant un module d'éclairage extérieur (2000), dans lequel l'élément de consommation ou de génération d'énergie électrique (80) comprend un dispositif d'éclairage (85), dans lequel l'élément de pontage (800) comprend un élément optique transmetteur de lumière (1500), et facultativement un élément de fermeture (1600), et dans lequel un élément de scellement (1400) relie par scellement l'élément de pontage (800) et le socle (1200).

14. Procédé pour fournir un boîtier scellé (1000), le procédé comprenant :
- la fourniture d'un élément passe-câble (1) selon l'une quelconque des revendications précédentes 1 à 8, dans lequel le passage de câble (300) comprend le câble d'électricité (100) ;
la fourniture d'un socle (1200) comprenant une ouverture de socle (1255) et une unité réceptrice (1050), dans lequel le socle (1200) est configuré pour contenir au moins une partie de l'élément passe-câble (1) ; et
l'agencement d'au moins une partie de l'élément d'engagement (50) comprenant l'élément d'alignement (56) à travers l'ouverture de socle (1255), dans lequel au moins une partie du corps (200) est configurée dans l'unité réceptrice (1050).

15. Moule (3) pour fournir un élément passe-câble (1) selon l'une quelconque des revendications 1 à 8, dans lequel le moule comprend une cavité (5) configurée pour recevoir (i) une partie du câble d'électricité (100) et (ii) un polymère à mouler par injection sur la partie du câble d'électricité (100), et dans lequel la cavité comprend une forme correspondant au corps (200), à l'élément d'engagement (50), et à la saillie souple (26).
